# EUROPEAN PATENT APPLICATION

(11) **EP 4 152 667 A1**
(43) Date of publication of application: **22.03.2023**
(21) Application number: 20947764.5
(22) Date of filing: 31.07.2020
(51) Int. Cl.: H04L 5/00

(54) **FEEDBACK CODEBOOK DETERMINING METHOD, DEVICE, EQUIPMENT, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIN, Yanan, Dongguan, Guangdong 523860 (CN); XU, Jing, Dongguan, Guangdong 523860 (CN)
(74) Representative: Ipside
(86) International application number: PCT/CN2020/106378
(87) International publication number: WO 2022/021407

(57) **Abstract**

The present disclosure relates to the field of mobile communication. Disclosed are a feedback codebook determining method, a device, equipment, and a storage medium. The method comprises: determining a first time-domain resource set, the first time-domain resource set comprising at least one time-domain resource, the first time-domain resource of the at least one time-domain resource pertaining to one slot, and the slot comprising multiple subslots; determining a second time-domain resource set in the first time-domain resource set, an ending time-domain symbol of time-domain resources in the second time-domain resource set being located in the first subslot of the multiple subslots; and determining a feedback codebook on the basis of the second time-domain resource set, thus breaking through the limitation that the feedback codebook could not be determined with a single subslot being the unit, and increasing the accuracy of the feedback codebook.

## Description

### TECHNICAL FIELD

The present disclosure relates to a field of mobile communications, and in particular to a method, apparatus, and device for determining a feedback codebook, and a storage medium.

### BACKGROUND

In the related art, with a rapid development of a mobile communication technology and a wide application of terminal devices, the terminal devices may receive a PDSCH (Physical Downlink Shared Channel), map feedback information of the PDSCH on a feedback codebook, and send the feedback information to a base station, so as to inform the base station whether the terminal device correctly receives the PDSCH.

When the terminal device transmits the feedback information of the PDSCH to the base station, the feedback codebook has to be determined based on a single subslot. However, a slot may include multiple of subslots. A time-domain resource of one PDSCH may occupy more than one subslots, such that the feedback codebook cannot be determined based on the single subslot and the feedback information cannot be sent to the base station. Therefore, a method for determining the feedback codebook is urgently required.

### SUMMARY OF THE DISCLOSURE

A method, apparatus, and device for determining a feedback codebook, and a storage medium are provided in the embodiments of the present disclosure. A limitation that the feedback codebook cannot be determined with the single subslot as a unit may be broken through and an accuracy of determining the feedback codebook may be improved.

According to a first aspect of the present disclosure, a method for determining a feedback codebook may be provided and applied to a terminal device. The method may include determining a first time-domain resource set, wherein the first time-domain resource set comprises at least one time-domain resource, a first time-domain resource of the at least one time-domain resource belongs to a slot, and the slot comprises a plurality of subslots; determining a second time-domain resource set from the first time-domain resource set, wherein an end time-domain symbol of a time-domain resource of the second time-domain resource set is located in a first subslot of the plurality of subslots; and determining the feedback codebook based on the second time-domain resource set.

According to a second aspect of the present disclosure, an apparatus for determining a feedback codebook may be provided and arranged in a terminal. The apparatus may include a first set-determining module configured to determine a first time-domain resource set, wherein the first time-domain resource set comprises at least one time-domain resource, a first time-domain resource of the at least one time-domain resource belongs to a slot, and the slot comprises a plurality of subslots; a second set-determining module configured to determine a second time-domain resource set from the first time-domain resource set, wherein an end time-domain symbol of a time-domain resource of the second time-domain resource set is located in a first subslot of the plurality of subslots; and a codebook-determining module configured to determine the feedback codebook based on the second time-domain resource set.

According to a third aspect of the present disclosure, a terminal device may be provided and include a processor; a transceiver connected to the processor; and a memory configured to store executable instructions of the processor; wherein the processor is configured to load and execute the executable instructions to implement the method for determining the feedback codebook as described in the above aspect of the present disclosure.

According to a fourth aspect of the present disclosure, a computer-readable storage medium may be provided and store executable instructions, wherein the executable instructions are loaded and executed by a processor to implement the method for determining the feedback codebook as described in the above aspect of the present disclosure.

Solutions provided in the embodiments of the present disclosure may at least include the following beneficial effects.

In the method, the apparatus, the device, and the storage medium provided in the embodiments of the present disclosure, the subslot is taken as the unit to divide the plurality of the time-domain resources in the first time-domain resource set and obtain the second time-domain resource sets. Since the time-domain resources of the second time-domain resource set which is determined all belong to a subslot, the feedback codebook may be determined based on the time-domain resources of the second time-domain resource set, which may break through the limitation that the feedback codebook cannot be determined with the single subslot as the unit and improve the accuracy of determining the feedback codebook.

### BRIEF DESCRIPTION OF THE DRAWINGS

In order to more clearly illustrate technical solutions in embodiments of the present disclosure, the drawings used in the embodiments will be briefly described below. Apparently, the drawings in the following description are some embodiments of the present disclosure. Those skilled in the art may also obtain other drawings based on these drawings without paying any creative work.
FIG. 1 is a schematic block diagram of a communication system according to an exemplary embodiment of the present disclosure.
FIG. 2 is a schematic flowchart of a method for determining a feedback codebook according to an exemplary embodiment of the present disclosure.
FIG. 3 is a schematic allocation diagram of time-domain resources according to an exemplary embodiment of the present disclosure.
FIG. 4 is a schematic flowchart of an information-transmitting method according to an exemplary embodiment of the present disclosure.
FIG. 5 is a schematic block diagram of an apparatus for determining the feedback codebook according to an exemplary embodiment of the present disclosure.
FIG. 6 is a schematic block diagram of another apparatus for determining the feedback codebook according to an exemplary embodiment of the present disclosure.
FIG. 7 is a schematic structural view of a communication device according to an exemplary embodiment of the present disclosure.

### DETAILED DESCRIPTION

In order to make purposes, the technical solutions, and advantages of the present disclosure clearer, the embodiments of the present disclosure will be further described in detail below with reference to the accompanying drawings.

It can be understood that terms "first", "second" and the like used in the present disclosure may be configured herein to describe various concepts which are not limited by these terms unless otherwise specified. These terms are only configured to distinguish a concept from another concept.

First of all, terms involved in the embodiments of the present disclosure will be briefly introduced in the following.

Regarding the term "slot", in the communication system, a slot may include a preset number of time-domain symbols. For example, a slot may include 14 time-domain symbols.

Regarding the term "subslots" or "subslot", the subslots or slot are obtained by dividing the slot. A slot may include multiple of subslots. A sunslot may include at least one time-domain symbol. For example, a slot may include 2 subslots, 3 subslotsm, or other numbers of subslots. For another example, when the slot includes 14 time-domain symbols and the slot includes 2 subslots, each of the subslots may include 7 time-domain symbols.

Regarding the term "time-domain resource set", the time-domain resource set may include multiple of time-domain resources, and each of the time-domain resources may correspond to at least one slot.

Regarding the term "feedback codebook", the feedback codebook may reserve bits for the feedback information corresponding to the PDSCH, such that the terminal device may transmit the feedback information corresponding to the PDSCH to the base station.

When the base station sends the PDSCH to the terminal device, the terminal device may map the feedback information on the feedback codebook, and send the feedback information to the base station. The feedback information may be ACK (acknowledgement message) information or NACK (negative message) information. When the feedback information is the ACK information, the ACK information may be configured to indicate that the terminal device determines that the PDSCH is received. Or, when the feedback information is the NACK information, the NACK information is configured to indicate that the terminal device does not receive the PDSCH.

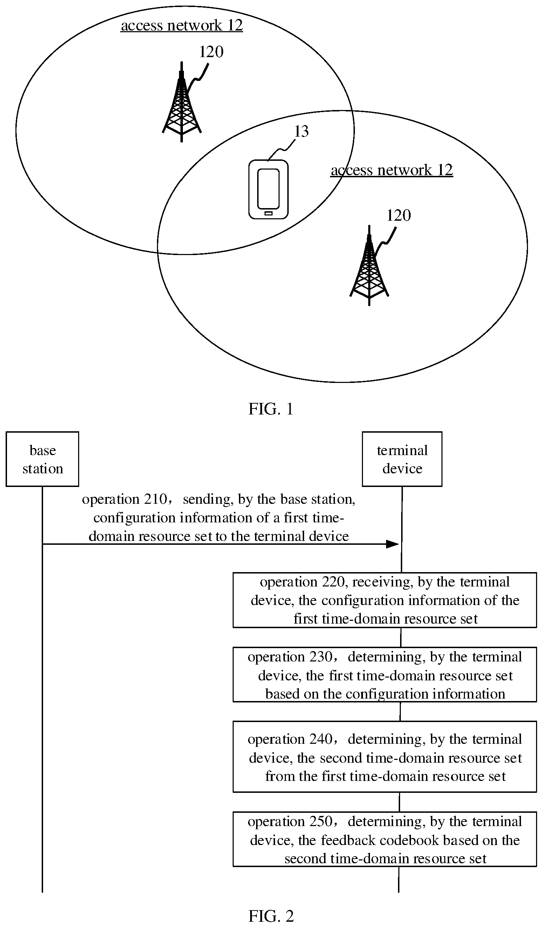

FIG. 1 is a schematic block diagram of a communication system according to an exemplary embodiment of the present disclosure. The communication system may include an access network 12 and a terminal device 13.

The access network 12 may include several network devices 120. The network devices 120 may be the base stations which are apparatuses deployed in the access network 12 and configured to provide functions of wireless communications to terminal devices. The base stations may include various forms of macro base stations, micro base stations, relay stations, access points, and the like. In systems adopting different radio access technologies, names of devices having functions of the base stations may vary. For example, in a LTE system, these devices may be called eNodeBs or eNBs. In a 5G NR-U system, these devices may be called gNodeBs or gNBs. As a communication technology evolves, a description of "base stations" may change. For a convenience to describe the embodiments of the present disclosure, the apparatus for providing the functions of the wireless communications for the terminal device 13 are collectively referred to as access network devices.

The terminal device 13 may include various handheld devices, vehicle-mounted devices, wearable devices, computing devices, or other processing devices connected to wireless modems, which have the functions of the wireless communications, and various forms of user devices, MSs (Mobile Stations), and the terminal devices, etc. For a convenience of description, the devices described above are collectively referred to as the terminal devices. The access network devices 120 and the terminal device 13 may communicate with each other through a certain air-interface technology, for example, a Uu interface.

The technical solutions of the embodiments of the present disclosure may be applied to various communication systems, for example, a GSM (Global System of Mobile communication) system, a CDMA (Code Division Multiple Access) system, a WCDMA (Wideband Code Division Multiple Access) system, a GPRS (General Packet Radio Service), a LTE (Long Term Evolution) system, a LTE FDD (Frequency Division Duplex) system, a LTE TDD (Time Division Duplex) system, an LTE-A (Advanced long term evolution) system, a NR (New Radio) system, an evolution system of the NR system, a LTE-U (LTE-based access to unlicensed spectrum) system, a NR-U system, a UMTS (Universal Mobile Telecommunication System), a WiMAX (Worldwide Interoperability for Microwave Access) communication system, a WLAN (Wireless Local Area Networks), a WiFi (Wireless Fidelity), a next-generation communication system, or other communication systems, and the like.

In general, a connecting number supported by a traditional communication system is limited and easy to achieve. However, as a development of the communication technology, mobile communication systems may not only support traditional communications but also support communications such as a D2D (Device to Device) communication, a M2M (Machine to Machine) communication, a MTC (Machine Type Communication), a V2V (Vehicle to Vehicle) communication, and a V2X (Vehicle to everything) system, and so on. The embodiments of the present disclosure may also be applied to these communication systems.

FIG. 2 is a schematic flowchart of a method for determining a feedback codebook according to an exemplary embodiment of the present disclosure. The method shown in FIG. 2 is applied to the terminal device and the base stations as shown in FIG. 1 and includes at least part of the following.

In an operation 210, sending, by the base station, configuration information of a first time-domain resource set to the terminal device.

The first time-domain resource set may include at least one time-domain resource. Any one of the at least one time-domain resource is configured to transmit the PDSCH, such that the base station may transmit the PDSCH on any time-domain resource and the terminal may receive the PDSCH on the time-domain resource. In some embodiments, the time-domain resource may be a PDSCH occasion.

The configuration information is configured to indicate positions of time-domain resources in the first time-domain resource set.

In some embodiments, before the base station sends the configuration information of the first time-domain resource set to the terminal device, the base station may acquire the configuration information of at least one time-domain resource in the first time-domain resource set which may constitute the configuration information of the first time-domain resource set.

The base station sends the configuration information of the first time-domain resource set to the terminal device, which may indicate that the base station sends the configuration information of the at least one time-domain resource to the terminal device.

In some embodiments, the configuration information may include at least one of the following.
(1) A slot offset at which the PDSCH is located.
   The slot offset is configured to indicate a slot offset between the PDSCH and a corresponding PUCCH (Physical Uplink Control Channel). The base station may send the slot offset at which the PDSCH is located to the terminal device. The terminal device may determine the slot offset between the PDSCH and the PUCCH, and further determine the time-domain resource of the PUCCH.
(2) An initiate time-domain symbol of the PDSCH in one slot.
   The initiate time-domain symbol may be configured to indicate an initiate position of the time-domain resource of the PDSCH in the slot. For example, the slot may include 14 time-domain symbols, and the initiate time-domain symbol may be a first time-domain symbol, a second time-domain symbol, or other time-domain symbols in the slot. When the initiate time-domain symbol of the PDSCH is the second time-domain symbol in the slot, the second time-domain symbol in the slot is an initiate point, and a reference number of time-domain symbols after the initiate point may constitute a time-domain resource of the PDSCH.
(3) A length of the time-domain resource of the PDSCH.

The length of the time-domain resource is configured to indicate a length of the time-domain resource occupied by the PDSCH. For example, the length of the time-domain resource is 5 time-domain symbols, 10 time-domain symbols, or other lengths. When the length of the time-domain resource of the PDSCH is 5 time-domain symbols, it is indicated that the PDSCH may occupy 5 time-domain symbols in the slot.

In an operation 220, receiving, by the terminal device, the configuration information of the first time-domain resource set.

In some embodiments, the base station may send the configuration information to the terminal device through a high-layer information, and the terminal device may receive the configuration information through the high-layer information.

In some embodiments, the high-layer information may be RRC (Radio Resource Control) information, RAN (Radio Access Network) information, or other types of information.

It should be noted that, operations 201 and 202 in the embodiments of the present disclosure are optional. In another embodiment, the operations 201 and 202 may be not performed. The base station may be not required to notify the terminal device of the configuration information of the first time-domain resource set. The configuration information of the first time-domain resource set may be stipulated by a protocol. The terminal device may determine the first time-domain resource set based on the protocol.

In an operation 230, determining, by the terminal device, the first time-domain resource set based on the configuration information.

The at least one time-domain resource in the first time-domain resource set belongs to at least one slot. The first time-domain resource of the at least one time-domain resource belongs to a slot, and the slot may include multiple subslots. When the terminal device receives the configuration information of the first time-domain resource set sent by the base station, the terminal device may determine each time-domain resource in the first time-domain resource set based on the configuration information.

In an embodiment, the configuration information of the first time-domain resource set may include at least one information of the slot offset at which the PDSCH is located, the initiate time-domain symbol of the PDSCH in one slot, and the length of the time-domain resource of the PDSCH. The terminal device may determine the at least one time-domain resource based on the at least one information above.

The first time-domain resource set may include the at least one time-domain resource in the following two cases. (1) The first time-domain resource set may include a time-domain resource. (2) The first time-domain resource set may include multiple time-domain resources.

In some embodiments, the time-domain resources in the first time-domain resource set may satisfy at least one of the following conditions.
(1) A start time-domain symbol and an end time-domain symbol of one of the at least one time-domain resource belong to different subslots.

In some embodiments, each of the at least one time-domain resource may correspond to at least one time-domain symbol. A time-domain resource with the start time-domain symbol and the end time-domain symbol belonging to different subslots may exist in the at least one time-domain resource.

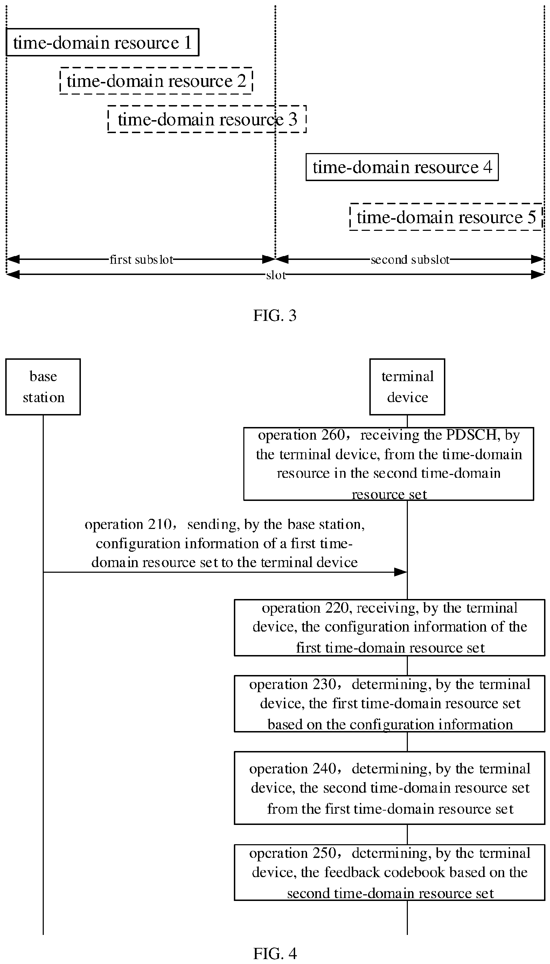

For example, as shown in FIG. 3, the first time-domain resource set may include five time-domain resources, that is, a time-domain resource 1, a time-domain resource 2, a time domain-resource 3, a time-domain resource 4, and a time-domain resource 5. The time-domain resource 1 and the time-domain resource 2 belong to a first subslot, and the time-domain resource 4 and the time-domain resource 5 belong to a second subslot. The start time-domain symbol of the time-domain resource 3 may belong to the first subslot, and the end time-domain symbol of the time-domain resource 3 may belong to the second subslot. That is, the start time-domain symbol and the end time-domain symbol of the time-domain resource 3 belong to different subslots.

(2) The at least one time-domain resource may include multiple of time-domain resources, and end time-domain symbols of at least two of the multiple of time-domain resources are located in different subslots.

When the at least one time-domain resource may include the multiple of time-domain resources, the time-domain symbol of each of the time-domain resources may be determined, and the end time-domain symbol of the each of the time-domain resources may be further acquired. The multiple of time-domain resources may include at least two time-domain resources of which the end time-domain symbols are located in different subslots.

For example, as shown in FIG. 3, the end time-domain symbol of the time-domain resource 1 and the end time-domain symbol of the time-domain resource 2 are located in the first subslot. The end time-domain symbol of the time-domain resource 3, the end time-domain symbol of the time-domain resource 4, and the end time-domain symbol of the time-domain resource 5 are located in the second subslot. It can be seen from FIG. 3 that the first time-domain resource set includes the at least two time-domain resources of which the end time-domain symbols are located in the different subslots.

(3) In the at least one time-domain resource, an initiate time-domain symbol of a time-domain resource having the initiate time-domain symbol earliest therein and an end time-domain symbol of a time-domain resource having the end time-domain symbol latest therein are located in different subslots.

In some embodiments, the time-domain resource having the initiate time-domain symbol earliest therein is the earliest time-domain resource in the at least one time-domain resource. The first time-domain symbol of the earliest time-domain resource is the initiate time-domain symbol of the earliest time-domain resource. The time-domain resource having the end time-domain symbol latest therein is the latest time-domain resource in the at least one time-domain resource. The last time-domain symbol of the latest time-domain resource is the end time-domain symbol of the latest time-domain resource.

In some embodiments, when the at least one time-domain resource includes one time-domain resource, the first time-domain symbol of the time-domain resource is the initiate time-domain symbol of the time-domain resource. The last time-domain symbol of the time-domain resource is the end time-domain symbol of the time-domain resource.

For example, when the time-domain resource includes 5 time-domain symbols including a time-domain symbol 1, a time-domain symbol 2, a time-domain symbol 3, a time-domain symbol 4, and a time-domain symbol 5 in a sequence from a front to a back, the time-domain symbol 1 is the initiate time-domain symbol of the time-domain resource, and the time-domain symbol 5 is the end time-domain symbol of the time-domain resource.

In some embodiments, when the at least one time-domain resource includes the multiple of time-domain resources, the time-domain resource having the initiate time-domain symbol earliest therein is a time-domain resource ranking the first. The time-domain resource having the end time-domain symbol latest therein is a time-domain resource ranking the last.

For example, the multiple of time-domain resources may include the time-domain resource 1 and the time-domain resource 2. The time-domain resource 1 may include the time-domain symbol 1, the time-domain symbol 2, and the time-domain symbol 3. The time-domain resource 2 may include the time-domain symbol 3, the time-domain symbol 4, the time-domain symbol 5, and the time-domain symbol 6. The larger the number of the time-domain symbol, the later the time-domain symbol. The time-domain symbol 1 is the initiate time-domain symbol of the time-domain resource having the initiate time-domain symbol earliest therein, and the time-domain symbol 6 is the end time-domain symbol of the time-domain resource having the end time-domain symbol latest therein.

In some embodiments, the first time-domain resource set is represented by a allocation table of the time-domain resources. The allocation table of the time-domain resources may include the at least one time-domain resource. Each row of the allocation table of the time-domain resources is configured to indicate the time-domain resource transmitting the PDSCH.

In an embodiment, as shown in FIG. 3, the allocation table of the time-domain resources includes the at least one time-domain resource. Each time-domain resource may correspond to one of the time-domain resources in the allocation table of the time-domain resources.

For example, the allocation table of the time-domain resources may include 5 PDSCH occasions, which are a PDSCH occasion 1, a PDSCH occasion 2, a PDSCH occasion 3, a PDSCH occasion 4, and a PDSCH occasion 5.

It should be noted that, the embodiments of the present disclosure only take the terminal device determining the first time-domain resource set based on the configuration information sent by the base station as an example. In another embodiment, the first time-domain resource set may be determined by a negotiation between the base station and the terminal device. The terminal device may directly determine each time-domain resource in the first time-domain resource set based on a result of the negotiation.

In an operation 240, determining, by the terminal device, the second time-domain resource set from the first time-domain resource set.

In some embodiments, the first time-domain resource set may include the at least one time-domain resource. The at least one time-domain resource corresponds to the multiple subslots of the at least one slot. The terminal device may divide the time-domain resources in the first time-domain resource set with a subslot as the unit, and obtain second time-domain resource sets.

The second time-domain resource set may include at least one time-domain resource. The end time-domain symbols of the time-domain resources in the second time-domain resource set may be located in first subslots of the multiple subslots.

In the process of determining the second time-domain resource set, for the subslot of the at least one slot, the terminal device may select the time-domain resources of which the end time-domain symbols are located in the subslot from the multiple of time-domain resources, to constitute the second time-domain resource set.

For example, the time-domain resource 1, the time-domain resource 2, the time-domain resource 3, the time-domain resource 4, and time-domain resource 5 as shown in FIG 3, may correspond to two subslots. For the first subslot, both the end time-domain symbol of the time-domain resource 1 and the end time-domain symbol of time-domain resource 2 are located in the first sub-slot. A first second time-domain resource set which is determined includes the time-domain resource 1 and the time-domain resource 2. For the second subslot, the end time-domain symbol of the time-domain resource 3, the end time-domain symbol of the time-domain resource 4, and the end time-domain symbol of time-domain resource 5 are located in the second sub-slot. A second second time-domain resource set which is determined includes the time-domain resource 3, the time-domain resource 4, and the time-domain resource 5.

It should be noted that, the embodiments of the present disclosure only take that the second time-domain resource set may be determined based on each sub-slot as an example for description. In another embodiment, the time-domain resource of which the end time-domain symbol is located in the subslot may not exist. For the subslot, no second time-domain resource set may be determined.

In an operation 250, determining, by the terminal device, the feedback codebook based on the second time-domain resource set.

The feedback codebook may include bits of the feedback information corresponding to the time-domain resources in the second time-domain resource set. The feedback codebook may be a type-1 codebook, or other types of codebooks.

The feedback information is configured to indicate a situation of the terminal device receiving information on a corresponding time-domain resource. When receiving the information sent by the base station on the time-domain resource, the terminal device may send acknowledge information to the base station to indicate that the information is received. When not receiving the information sent by the base station on the time-domain resource, the terminal device may send negative information to the base station to indicate that the information is not received.

The terminal device may determine the feedback codebook of the feedback information based on the second time-domain resource set. In the subsequence, the terminal device may send the feedback information to the base station based on the feedback codebook to inform the base station whether the information is received.

In some embodiments, the feedback information may be the ACK information or the NACK information. The ACK information is an acknowledgment message configured to indicate that the information sent by the base station is received by the terminal device. The NACK information is a negative message configured to indicate that the information sent by the base station is not received by the terminal device.

In some embodiments, the bits of the feedback information corresponding to the time-domain resources in the second time-domain resource set are configured to carry feedback information corresponding to PDSCHs received from the time-domain resources.

When receiving the PDSCH from the time-domain resource in the second time-domain resource set, the terminal device may map the ACK information corresponding to the PDSCH at the bits in the feedback codebook corresponding to the time-domain resource of the PDSCH, and further transmit the ACK information corresponding to the PDSCH through the feedback codebook. When not receiving the PDSCH from the time-domain resource in the second time-domain resource set, the terminal device may map the NACK information corresponding to the PDSCH at the bits in the feedback codebook corresponding to the time-domain resource of the PDSCH.

In some embodiments, the bits in the feedback codebook corresponding to the time-domain resource of a first PDSCH in the second time-domain resource set are earlier than the bits in the feedback codebook corresponding to the time-domain resource of a second PDSCH in the second time-domain resource set. The time-domain resource of the first PDSCH do not overlap with the time-domain resource of the second PDSCH, and is earlier than the time-domain resource of the second PDSCH.

In some embodiments, the operation 250 may include an operation 2501.

In the operation 2501, determining, by the terminal device, a set of bits in the feedback codebook corresponding to each time-domain resource in the second time-domain resource set.

The terminal device may determine the set of bits in the feedback codebook corresponding to each time-domain resource in the second time-domain resource set. After the set of bits in the feedback codebook corresponding to each time-domain resource in the second time-domain resource set is determined, the feedback codebook may be determined.

In addition, when the second time-domain resource set includes at least two time-domain resources overlapping with each other, the at least two time-domain resources overlapping with each other may correspond to the same set of bits in the feedback codebook.

In some embodiments, the terminal device determining the set of bits in the feedback codebook corresponding to each time-domain resource in at least one second time-domain resource set, may include the following two manners.

A first manner is determining a set of bits in the feedback codebook corresponding to the multiple of time-domain resources in response to the multiple of time-domain resources in the second time-domain resource set overlapping.

In some embodiments, the multiple of time-domain resources overlapping means that the multiple of time-domain resources correspond to the same time-domain symbol. For example, the time-domain resource 1 may correspond to the time-domain symbol 1, the time-domain symbol 2, and the time-domain symbol 3. The time-domain resource 2 may correspond to the time-domain symbol 2, the time-domain symbol 3, and the time-domain symbol 4. Both the time-domain resource 1 and time-domain symbol resource 2 correspond to the time-domain symbol 2 and the time-domain symbol 3, which indicates that the time-domain resource 1 overlaps with the time-domain resource 2.

When the multiple of time-domain resources in the second time-domain resource set overlap, the feedback information corresponding to the multiple of time-domain resources may share one set of bits. In this way, it is determined that the multiple of time-domain resources correspond to the one set of bits in the feedback codebook.

A second manner is determining a set of bits in the feedback codebook corresponding to the first time-domain resource and at least one other set of bits in the feedback codebook corresponding to other time-domain resources in response to the first time-domain resource in the second time-domain resource set being not overlapping with the other time-domain resources in the second time-domain resource set.

In some embodiments, the time-domain resources being not overlapping means that two time-domain resources correspond to different time-domain symbols. For example, the time-domain resource 1 may correspond to the time-domain symbol 1, the time-domain symbol 2, and the time-domain symbol 3. The time-domain resource 2 may correspond to the time-domain symbol 4, the time-domain symbol 5, and the time-domain symbol 6. The time-domain resource 1 does not have the same time-domain symbol with the time-domain resource 2, which indicates that the time-domain resource 1 does not overlap with the time-domain resource 2.

For the second time-domain resource set corresponding to each of at least one subslot, when the second time-domain resource set includes the time-domain resources which are not overlapping with each other, the set of bits in the feedback codebook corresponding to the first time-domain resource which is not overlapping may be determined. The at least one other set of bits in the feedback codebook corresponding to other time-domain resources which are not overlapping may be determined.

In some embodiments, when multiple of time-domain resources of the other time-domain resources overlap, it is determined that the other time-domain resources correspond to one set of bits. When the other time-domain resources include the time-domain resources which are not overlapping with each other, a set of bits in the feedback codebook corresponding to a second time-domain resource which is not overlapping of the other time-domain resources may be determined. The at least one other set of bits in the feedback codebook corresponding to the other time-domain resources except for the second time-domain resource.

For example, the second time-domain resource set includes the time-domain resource 1, the time-domain resource 2, the time-domain resource 3, and time-domain resource 4. The time-domain resource 1 corresponds to the time-domain symbol 1, the time-domain symbol 2, the time-domain symbol 3. The time-domain resource 2 corresponds to the time-domain symbol 4, the time-domain symbol 5, and the time-domain symbol 6. The time-domain resource 3 corresponds to the time-domain symbol 7, the time-domain symbol 8, and the time-domain symbol 9. The time-domain resource 4 corresponds to the time-domain symbol 8, the time-domain symbol 9, and time-domain symbol 10. The time-domain resource 1 corresponds to a set of bits in the feedback codebook, the time-domain resource 2 corresponds to another set of bits in the feedback codebook, and the time-domain resource 3 and the time-domain resource 4 correspond to a yet set of bits in the feedback codebook.

In some embodiments, the number of each set of the bits in the feedback codebook includes any one of the following cases.
(1) The number of each set of the bits in the feedback codebook is the maximum number of a code-word scheduled by a DCI (Downlink Control Information).

The DCI sent by the base station to the terminal device corresponds to the number of the code-word in a scheduling process. The terminal device may determine the maximum number of the code-word scheduled by the DCI as the number of each set of the bits in the feedback codebook.

For example, when the maximum number of the code-word scheduled by one DCI is 2, the number of each set of the bits in the feedback codebook is 2.

(2) The number of each set of the bits in the feedback codebook is the maximum number of TBs (Transport Blocks) carried by a PDSCH.

When the base station transmits the PDSCH, the PDSCH may carry the TBs. The terminal device may determine the maximum number of the TBs carried by the PDSCH based on the PDSCH and the maximum number of the TBs as the number of each set of the bits in the feedback codebook.

For example, when the PDSCH may carry one TB, the number of each set of the bits in the feedback codebook may be 1.

(3) The number of each set of the bits in the feedback codebook is the maximum number of CBGs (Code block groups) carried by a PDSCH.

When the base station transmits the PDSCH, the PDSCH may carry the CBGs. The terminal device may determine the maximum number of the CBGs carried by the PDSCH based on the PDSCH and the maximum number of the CBGs as the number of each set of the bits in the feedback codebook.

For example, when the PDSCH may carry 2 CBGs, the number of each set of the bits in the feedback codebook may be 2.

In the embodiments of the present disclosure, the terminal device may map the feedback information of the PDSCH at the bits in the feedback codebook corresponding to the time-domain resource of the PDSCH, to transmit the feedback information corresponding to the PDSCH.

In some embodiments, the terminal device may transmit the feedback codebook through the PUCCH.

For example, as shown in FIG. 3, the slot may include the time-domain resource 1, the time-domain resource 2, the time-domain resource 3, the time-domain resource 4, and time-domain resource 5. The slot may include two subslots. For the first subslot, the second time-domain resource set which is determined may include the time-domain resource 1 and the time-domain resource 2. The time-domain resource 1 partially overlaps with the time-domain resource 2, and the time-domain resource 1 and the time-domain resource 2 may correspond to the set of bits in the feedback codebook. When receiving the PDSCH on the time-domain resource 1 or the time-domain resource 2, the terminal device may map the feedback information corresponding to the PDSCH at the set of bits in the feedback codebook.

For the second sub-slot, the second time-domain resource set which is determined may include the time-domain resource 3, the time-domain resource 4, and the time-domain resource 5. The time-domain resource 3 does not overlap with the time-domain resource 4 or the time-domain resource 5, while the time-domain resource 4 overlaps with the time-domain resource 5. The time-domain resource 3 may correspond to a set of bits in the feedback codebook, and the time-domain resource 4 and the time-domain resource 5 may correspond to another set of bits in the feedback codebook. When receiving the PDSCH on the time-domain resource 3, the terminal device may map the feedback information corresponding to the PDSCH at the set of bits in the feedback codebook corresponding to the time-domain resource 3. When receiving the PDSCH on the time-domain resource 4 or the time-domain resource 5, the terminal device may map the feedback information corresponding to the PDSCH at the another set of bits in the feedback codebook corresponding to the time-domain resource 4 and the time-domain resource 5.

In the method provided in the embodiments of the present disclosure, the subslot is taken as the unit to divide the plurality of the time-domain resources in the first time-domain resource set and obtain the second time-domain resource sets. Since the time-domain resources of the second time-domain resource set which is determined all belong to a subslot, the feedback codebook may be determined based on the time-domain resources of the second time-domain resource set, which may break through the limitation that the feedback codebook cannot be determined with the single subslot as the unit and improve the accuracy of determining the feedback codebook.

In addition, in a process of determining the feedback codebook, the multiple of time-domain resources overlapping with each other may configured to correspond to one set of bits in the feedback codebook. The multiple of time-domain resources corresponding to one set of bits may reduce a redundancy of the feedback codebook, such that a size of the feedback codebook may be reduced.

In addition, when the PDSCH is subsequently received on any time-domain resource in the second time-domain resource set, the feedback information of the PDSCH may be mapped in the feedback codebook to transmit. In this way, the feedback information being transmitted on the time-domain resource corresponding to the subslot may be achieved and an accuracy of transmitting the feedback information may be improved.

In addition, the terminal device may determine the at least one time-domain resource in the first time-domain resource set based on the configuration information sent by the base station, which may improve an accuracy of determining the time-domain resource by the terminal device.

In some embodiments, the embodiments of the present disclosure may be implemented by adopting the following pseudocode.

For a serving cell c, an active DL BWP, and an active UL BWP, the UE determines a set of ***M**_{A,C}* occasions for candidate PDSCH receptions for which the UE can transmit corresponding HARQ-ACK information in a PUCCH in slot ***n**_{U}*. If serving cell c is deactivated, the UE uses as the active DL BWP for determining the set of ***M**_{A,C}* occasions for candidate PDSCH receptions a DL BWP provided by firstActiveDownlinkBWP-Id. The determination is based:
(1) on a set of slot timing values *K*₁ associated with the active UL BWP;
   1. If the UE is configured to monitor PDCCH for DCI format 1_0 and is not configured to monitor PDCCH for DCI format 1_1 on serving cell c, ***K*₁** is provided by the slot timing values {1, 2, 3, 4, 5, 6, 7, 8} for DCI format 1_0;
   2. If the UE is configured to monitor PDCCH for DCI format 1_1 for serving cell c, is provided by dl-DataToUL-ACK for DCI format 1_1.
(2) on a set of row indexes R of a table that is provided either by a first set of row indexes of a table that is provided by pdsch-TimeDomainAllocationList in pdsch-ConfigCommon or by Default PDSCH time-domain resource allocation [6, TS 38.214], or by the union of the first set of row indexes and a second set of row indexes, if provided by pdsch-TimeDomainAllocationList in PDSCH-Config, associated with the active DL BWP and defining respective sets of slot offsets ***K*₀**, start and length indicators SLIV, and PDSCH mapping types for PDSCH reception as described in [6, TS 38.214].

If a UE is not provided CA-slot-offset for any serving cell of PDSCH receptions and for the serving cell of corresponding PUCCH transmission with HARQ-ACK information;

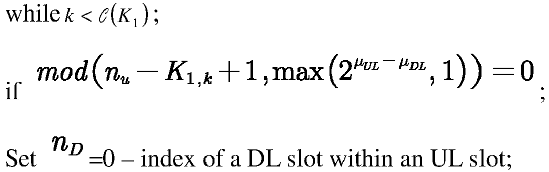

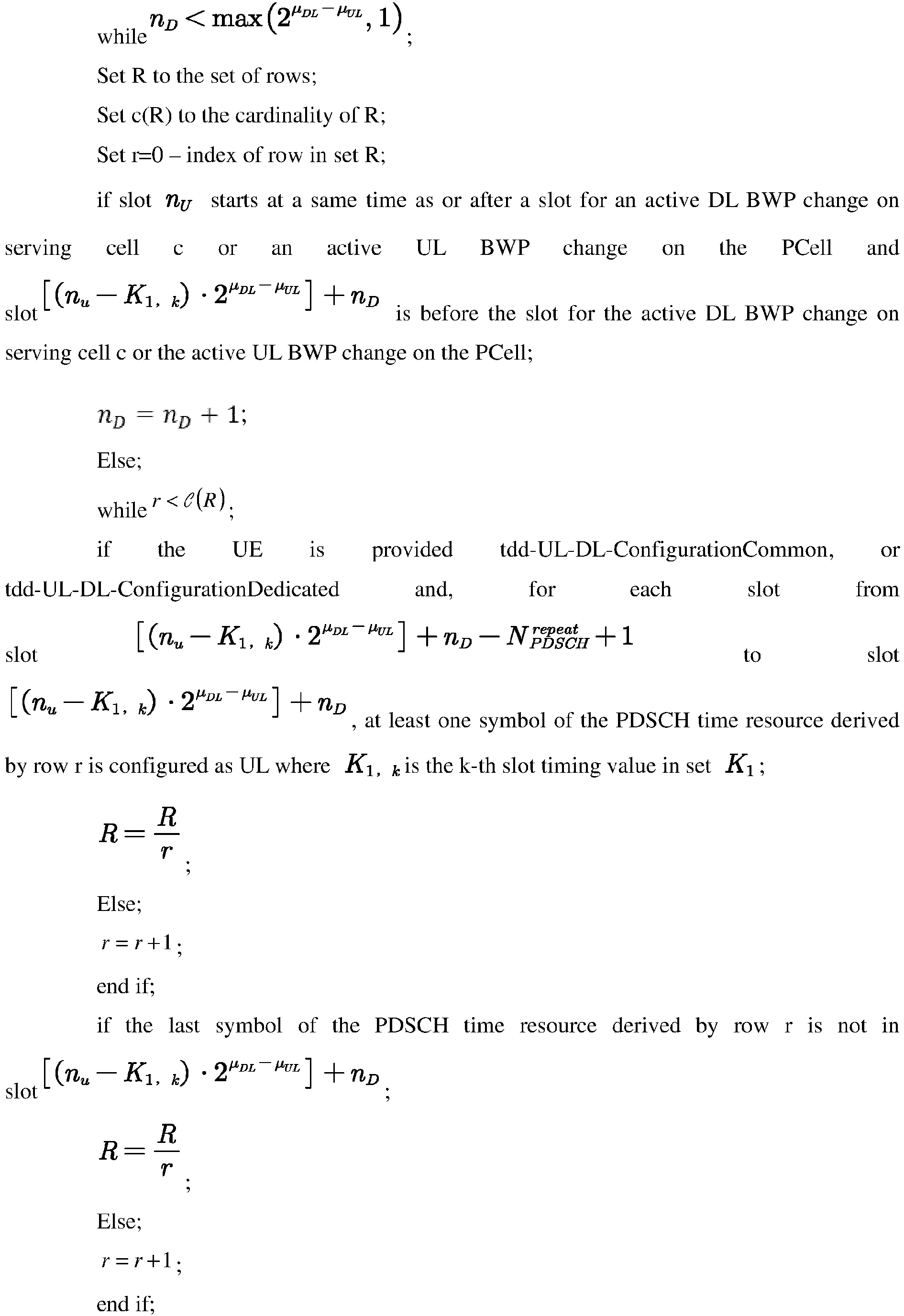

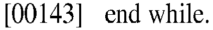

In the embodiments of the present disclosure, the following manner may be adopted to determine the second time-domain resource set.

First, a manner of determining the first time-domain resource set may be described.

For a serving cell c, an active DL (Down Link) BWP (Band Width Part) and an active UL (Up Link) BWP, the UE (User Equipment) may determine the set of ***M**_{A,C}* numbers of occasions configured to receive a candidate PDSCH. The UE may send the HARQ-ACK information corresponding to the candidate PDSCH through the PUCCH in the slot ***n**_{U}.* When the serving cell c is deactivated, the UE may adopt an active DL BWP to determine the set of the ***M**_{A,C}* numbers of occasions of the candidate PDSCH, and provide the DL BWP by a first active DL BWP-Id.

The above operations may achieve a solution of determining the first time-domain resource set. After receiving the PDSCH through the first time-domain resource set, the feedback information corresponding to the PDSCH may be sent.

A specific method of determining the first time-domain resource set may include the following manners.
(1) A set of slot timing values ***K*₁** associated with the active UL BWP;
   1. When the UE is configured to monitor the PDCCH in a DCI format 1_0 on the serving cell c, and is not configured to monitor the PDCCH in a DCI format 1_1 on the serving cell c, the ***K*₁** may be provided by the slot timing values {1, 2, 3 , 4, 5, 6, 7, 8} in the DCI format 1_0.
   2. When the UE is configured to monitor the PDCCH in the DCI format 1_1 on the serving cell c, the ***K*₁** may be provided by the DCI format 1_1 of DL-Data To UL-ACK.
(2) On a set of row indices R of a table, the row indices are provided by a first set of the row indices in the PDSCH-time-domain allocation list in a PDSCH-generic configuration, or by a default PDSCH time-domain resource allocation [6, TS 38.214], or by a union of the first set of the row indices and a second set of the row indices. When the row indices are provided by the PDSCH-time-domain allocation list in the PDSCH-Config, the ***K*₁** may be associated with the active DL BWP, and the slot offset ***K*₀,** the start and length indicators SLIV and a corresponding set of PDSCH mapping types for a PDSCH reception as described in [6, TS 38.214] may be defined.

Through the above operations, the manner of determining the first time-domain resource set is specifically described.

Secondly, the method of determining the second time-domain resource set is described.

When the UE is not provided with any serving cell for PDSCH reception and a CA slot offset of the serving cell having a corresponding PUCCH transmission with HARQ (Hybrid Automatic Repeat reQuest)-ACK information.

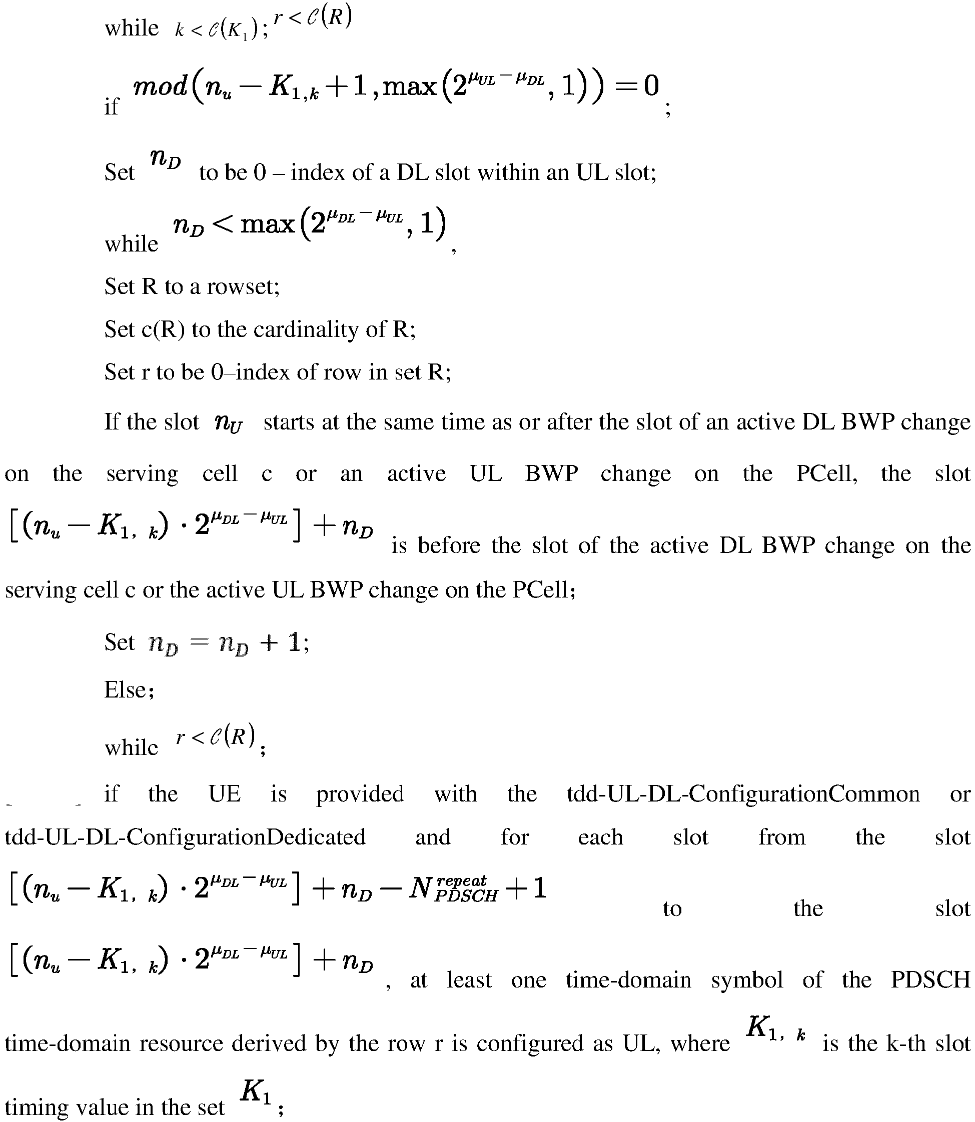

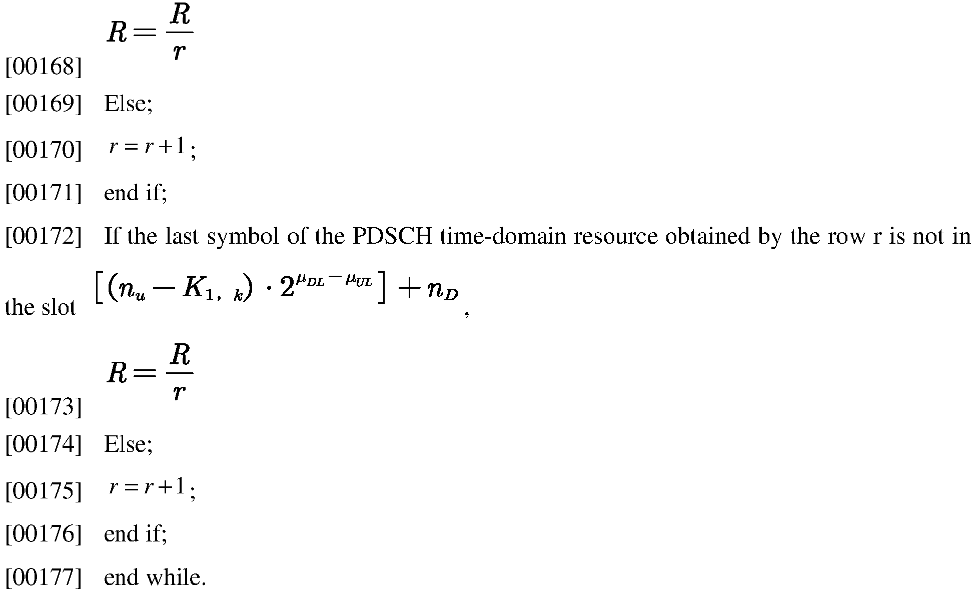

The above operations describe the solution of determining the second time-domain resource set based on the first time-domain resource set which is determined and a position relationship between the last symbol of each PDSCH time-domain resource and the slot.

In some embodiments according to FIG. 2, FIG. 4 is a schematic flowchart of an information-transmitting method according to an exemplary embodiment of the present disclosure. As shown in FIG. 4, the method may further include the following operations.

In an operation 260, receiving the PDSCH, by the terminal device, from the time-domain resource in the second time-domain resource set.

In the above embodiments according to FIG. 2, the terminal device may determine the second time-domain resource sets with the subslot as the unit, each of the second time-domain resource sets may include at least one time-domain resource, and the terminal device may receive the PDSCH on any time-domain resource.

In some embodiments, the terminal device may receive the DCI sent by the base station, and the PDSCH sent by the base station on the time-domain resource indicated by the DCI.

The base station may send the DCI to the terminal device. The DCI may indicate the time-domain resource on which the base station may send the PDSCH. The terminal device may receive the DCI, determine the time-domain resource based on the DCI, and receive the PDSCH sent by the base station on the time-domain resource.

In some embodiments, the base station may indicate the time-domain resource through an information domain of a Time domain resource assignment in the DCI.

It should be noted that, in the embodiments of the present disclosure, as long as the operation 260 is performed before the operation 250, and a performing sequence between the operation 260 and the operations 210-240 is not limited.

In the embodiments of the present disclosure, the terminal device may determine the feedback codebook based on the second time-domain resource set. The feedback codebook may include the feedback information corresponding to each time-domain resource. When receiving the PDSCH on the time-domain resource of the second time-domain resource set, the terminal device may map the feedback information corresponding to the PDSCH to the feedback codebook to transmit. In this way, the feedback information being transmitting on the time-domain resource corresponding to the subslot may be achieved, which may improve the accuracy of transmitting the feedback information.

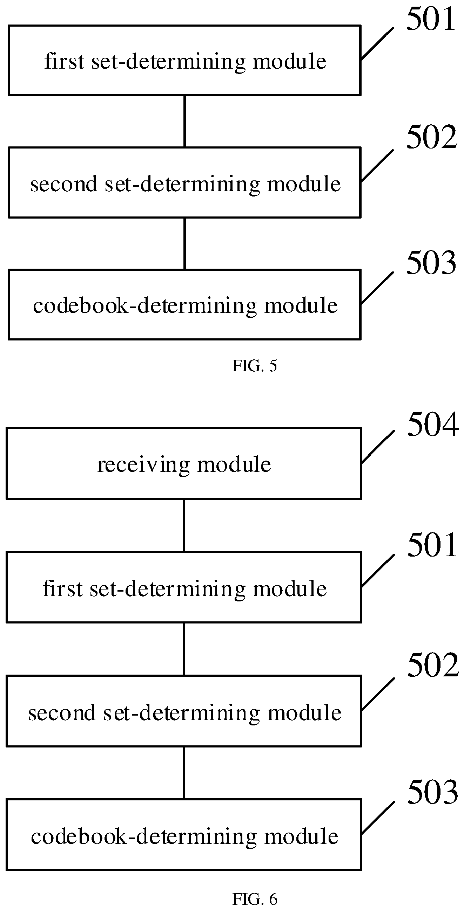

FIG. 5 is a schematic block diagram of an apparatus for determining the feedback codebook according to an exemplary embodiment of the present disclosure. The apparatus may include the following.

A first set-determining module 501, configured to determine a first time-domain resource set. The first time-domain resource set includes at least one time-domain resource, a first time-domain resource of the at least one time-domain resource belongs to a slot, and the slot includes a plurality of subslots.

A second set-determining module 502 is configured to determine a second time-domain resource set from the first time-domain resource set. An end time-domain symbol of a time-domain resource of the second time-domain resource set is located in a first subslot of the plurality of subslots.

The codebook-determining module 503 is configured to determine the feedback codebook based on the second time-domain resource set.

In some embodiments, a start time-domain symbol and the end time-domain symbol of one of the at least one time-domain resource belong to different subslots; and/or, the at least one time-domain resource includes a plurality of time-domain resources, and end time-domain symbols of at least two of the plurality of time-domain resources are located in different subslots; and/or in the at least one time-domain resource, an initiate time-domain symbol of a time-domain resource having the initiate time-domain symbol earliest therein and an end time-domain symbol of a time-domain resource having the end time-domain symbol latest therein are located in different subslots.

In some embodiments, the feedback codebook may include bits of feedback information corresponding to the time-domain resources in the second time-domain resource set.

In some embodiments, the codebook-determining module 503 may be configured to determine a set of bits in the feedback codebook corresponding to each of the time-domain resources in the second time-domain resource set.

In some embodiments, the codebook-determining module 503 may be configured to determine a set of bits in the feedback codebook corresponding to the plurality of time-domain resources in response to the plurality of time-domain resources in the second time-domain resource set overlapping; or determine a set of bits in the feedback codebook corresponding to the first time-domain resource and at least one other set of bits in the feedback codebook corresponding to other time-domain resources in response to the first time-domain resource in the second time-domain resource set being not overlapping with the other time-domain resources in the second time-domain resource set.

In some embodiments, any one of the at least one time-domain resource is configured to transmit a PDSCH.

In some embodiments, the bits of the feedback information corresponding to the time-domain resources in the second time-domain resource set are configured to carry feedback information corresponding to PDSCHs received from the time-domain resources.

In some embodiments, as shown in FIG. 6, the apparatus may further include a receiving module configured to receive configuration information of the first time-domain resource set sent by a base station.

In some embodiments, the configuration information may include at least one of the following.
a slot offset at which the PDSCH is located;
an initiate time-domain symbol of the PDSCH in one slot; and
a length of the time-domain resource of the PDSCH.

In some embodiments, the number of each set of the bits in the feedback codebook includes the following.
the maximum number of a code-word scheduled by a DCI (Downlink Control Information); or
the maximum number of TBs (Transport Blocks) carried by a PDSCH; or
the maximum number of CBGs (Code block groups) carried by a PDSCH.

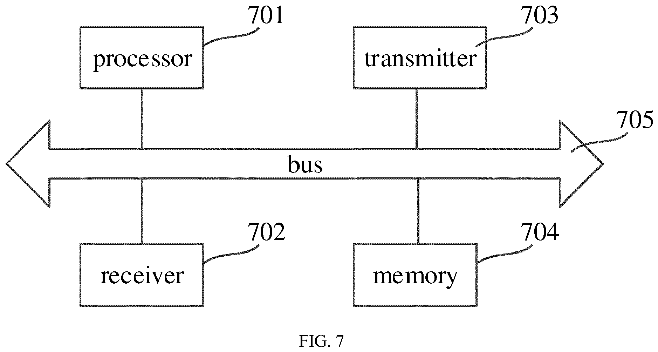

FIG. 7 is a schematic structural view of a communication device according to an exemplary embodiment of the present disclosure. The communication device may include a processor 701, a receiver 702, a transmitter 703, a memory 704, and a bus 705.

The processor 701 may include one or more processing cores, and execute various functional applications and information processing by running software programs and modules.

The receiver 702 and the transmitter 703 may be implemented as a communication component, which may be a communication chip.

The memory 704 is connected to the processor 701 by the bus 705.

The memory 704 may be configured to store at least one instruction, and the processor 701 may be configured to execute the at least one instruction, so as to implement various operations in the method embodiments above.

Furthermore, the communication device may be a terminal device or a base station. The memory 704 may be implemented by any type of a volatile storage device or a non-volatile storage device or a combination thereof. The volatile storage device or the non-volatile storage device may include but be not limited to a magnetic or optical disk, an EEPROM (Electrically Erasable Programmable Read Only Memory), an EPROM (Erasable Programmable Read Only Memory), a SRAM (Static Anytime Access Memory), a ROM (Read Only Memory), a Magnetic Memory, a Flash Memory, and a PROM (Programmable Read Only Memory).

In an embodiment, a computer-readable storage medium is also provided. The computer-readable storage medium may store executable instructions. The executable instructions may be loaded and executed by a processor to implement the method for determining the feedback codebook executed by the communication device according to various method embodiments above.

Those of ordinary skill in the art can understand that all or part of the operations of implementing the above embodiments may be completed by a hardware or by instructing the related hardware through a program. The program may be stored in the computer-readable storage medium. The storage medium above may be a read-only memory, a magnetic disk, or an optical disk, etc.

The above descriptions are only some embodiments of the present disclosure, and are not intended to limit the present disclosure. Any modifications, equivalent replacements, and improvements, etc. made within the spirit and principles of the present disclosure shall be included in a protection scope of the present disclosure.

## Claims

1. A method for determining a feedback codebook, applied to a terminal device, comprising:
determining a first time-domain resource set, wherein the first time-domain resource set comprises at least one time-domain resource, a first time-domain resource of the at least one time-domain resource belongs to a slot, and the slot comprises a plurality of subslots;
determining a second time-domain resource set from the first time-domain resource set, wherein an end time-domain symbol of a time-domain resource of the second time-domain resource set is located in a first subslot of the plurality of subslots; and
determining the feedback codebook based on the second time-domain resource set.

2. The method according to claim 1, wherein
a start time-domain symbol and the end time-domain symbol of one of the at least one time-domain resource belong to different subslots; and/or,
the at least one time-domain resource comprises a plurality of time-domain resources, and end time-domain symbols of at least two of the plurality of time-domain resources are located in different subslots; and/or
in the at least one time-domain resource, an initiate time-domain symbol of a time-domain resource having the initiate time-domain symbol earliest therein and an end time-domain symbol of a time-domain resource having the end time-domain symbol latest therein are located in different subslots.

3. The method according to claim 1 or 2, wherein the feedback codebook comprises bits of feedback information corresponding to the time-domain resources in the second time-domain resource set.

4. The method according to claim 3, wherein the determining the feedback codebook based on the second time-domain resource set, comprises:
determining a set of bits in the feedback codebook corresponding to each of the time-domain resources in the second time-domain resource set.

5. The method according to claim 4, wherein the determining a set of bits in the feedback codebook corresponding to each of the time-domain resources in the second time-domain resource set, comprises:
determining a set of bits in the feedback codebook corresponding to the plurality of time-domain resources in response to the plurality of time-domain resources in the second time-domain resource set overlapping; or
determining a set of bits in the feedback codebook corresponding to the first time-domain resource and at least one other set of bits in the feedback codebook corresponding to other time-domain resources in response to the first time-domain resource in the second time-domain resource set being not overlapping with the other time-domain resources in the second time-domain resource set.

6. The method according to any one of claims 1 to 5, wherein any one of the at least one time-domain resource is configured to transmit a PDSCH (Physical Downlink Shared Channel).

7. The method according to any one of claims 3 to 6, wherein the bits of the feedback information corresponding to the time-domain resources in the second time-domain resource set are configured to carry feedback information corresponding to PDSCHs received from the time-domain resources.

8. The method according to claim 1, wherein, before determining the first time-domain resource set, the method further comprises:
receiving configuration information of the first time-domain resource set sent by a base station.

9. The method according to claim 8, wherein the configuration information comprises at least one of:
a slot offset at which the PDSCH is located;
an initiate time-domain symbol of the PDSCH in one slot; and
a length of the time-domain resource of the PDSCH.

10. The method according to any one of claims 1 to 9, wherein the number of each set of the bits in the feedback codebook comprises:
the maximum number of a code-word scheduled by a DCI (Downlink Control Information); or
the maximum number of TBs (Transport Blocks) carried by a PDSCH; or
the maximum number of CBGs (Code block groups) carried by a PDSCH.

11. An apparatus for determining a feedback codebook, arranged in a terminal device, comprising:
a first set-determining module, configured to determine a first time-domain resource set, wherein the first time-domain resource set comprises at least one time-domain resource, a first time-domain resource of the at least one time-domain resource belongs to a time slot, and the time slot comprises a plurality of subslots;
a second set-determining module, configured to determine a second time-domain resource set from the first time-domain resource set, wherein an end time-domain symbol of a time-domain resource of the second time-domain resource set is located in a first subslot of the plurality of subslots; and
a codebook-determining module, configured to determine the feedback codebook based on the second time-domain resource set.

12. The apparatus according to claim 11, wherein
a start time-domain symbol and the end time-domain symbol of one of the at least one time-domain resource belong to different subslots; and/or,
the at least one time-domain resource comprises a plurality of time-domain resources, and end time-domain symbols of at least two of the plurality of time-domain resources are located in different subslots; and/or
in the at least one time-domain resource, an initiate time-domain symbol of a time-domain resource having the initiate time-domain symbol earliest therein and an end time-domain symbol of a time-domain resource having the end time-domain symbol latest therein are located in different subslots.

13. The device according to claim 11 or 12, wherein the feedback codebook comprises bits of feedback information corresponding to the time-domain resources in the second time-domain resource set.

14. The apparatus according to claim 13, wherein the codebook-determining module is configured to determine a set of bits in the feedback codebook corresponding to each of the time-domain resources in the second time-domain resource set.

15. The apparatus according to claim 14, wherein the codebook-determining module is configured to:
determine a set of bits in the feedback codebook corresponding to the plurality of time-domain resources in response to the plurality of time-domain resources in the second time-domain resource set overlapping; or
determine a set of bits in the feedback codebook corresponding to the first time-domain resource and at least one other set of bits in the feedback codebook corresponding to other time-domain resources in response to the first time-domain resource in the second time-domain resource set being not overlapping with the other time-domain resources in the second time-domain resource set.

16. The apparatus according to any one of claims 11 to 15, wherein any one of the at least one time-domain resource is configured to transmit a PDSCH.

17. The apparatus according to any one of claims 13 to 16, wherein the bits of the feedback information corresponding to the time-domain resources in the second time-domain resource set are configured to carry feedback information corresponding to PDSCHs received from the time-domain resources.

18. The apparatus of claim 11, further comprising:
a receiving module, configured to receive configuration information of the first time-domain resource set sent by a base station.

19. The apparatus according to claim 18, wherein the configuration information comprises at least one of:
a slot offset at which the PDSCH is located;
an initiate time-domain symbol of the PDSCH in one slot; and
a length of the time-domain resource of the PDSCH.

20. The apparatus according to any one of claims 11 to 19, wherein the number of each set of the bits in the feedback codebook comprises:
the maximum number of a code-word scheduled by a DCI; or
the maximum number of TBs carried by a PDSCH; or
the maximum number of CBGs carried by a PDSCH.

21. A terminal device, wherein the terminal device comprises:
a processor;
a transceiver connected to the processor; and
a memory configured to store executable instructions of the processor;
wherein the processor is configured to load and execute the executable instructions to implement the method for determining the feedback codebook according to any one of claims 1 to 10.

22. A computer-readable storage medium, storing executable instructions, wherein the executable instructions are loaded and executed by a processor to implement the method for determining the feedback codebook according to any one of claims 1 to 10.
